# EUROPÄISCHE PATENTSCHRIFT

(11) **EP 3 326 446 B1**
(45) Veröffentlichungstag und Bekanntmachung des Hinweises auf die Patenterteilung: **28.10.2020**
(21) Anmeldenummer: 17198783.7
(22) Anmeldetag: 27.10.2017
(51) Int. Cl.: A01D 41/127

(54) **GESCHWINDIGKEITSKONTROLLE EINER ERNTEMASCHINE**
SPEED CONTROL OF A HARVESTING MACHINE
DISPOSITIF DE COMMANDE DE VITESSE D'UNE MOISSONNEUSE

(30) Priorität: 23.11.2016 DE 102016223133
(43) Veröffentlichungstag der Anmeldung: 30.05.2018
(73) Patentinhaber: Deere & Company, Moline, IL 61265 (US)
(72) Erfinder: Münch Dr., Philipp, 68163 Mannheim (DE)
(74) Vertreter: Holst, Sönke

(56) Entgegenhaltungen:
- EP-A1- 1 243 173
- EP-A1- 2 832 205
- EP-A2- 2 057 880
- EP-A2- 2 253 822
- DE-A1- 19 921 466

## Beschreibung

Die Erfindung betrifft eine Anordnung zur Kontrolle der Vortriebsgeschwindigkeit einer Erntemaschine, umfassend eine elektronische Steuerung, die mit Mitteln zur Steuerung der Vortriebsgeschwindigkeit der Erntemaschine verbindbar ist.

### Stand der Technik

Landwirtschaftliche Erntemaschinen dienen zur Ernte von Pflanzen von einem Feld. In der Erntemaschine finden in der Regel Verarbeitungsprozesse statt, um das Erntegut zwecks späterer Weiterverarbeitung zu behandeln. So wird das Erntegut in einem Feldhäcksler gehäckselt und in einem Mähdrescher gedroschen, getrennt und gereinigt. Der Antrieb der Erntemaschine erfolgt durch einen Antriebsmotor, bei dem es sich üblicherweise um einen (Diesel-) Verbrennungsmotor handelt. Der Antriebsmotor treibt über einen ersten Antriebsstrang die Bodeneingriffsmittel (Räder oder Raupenlaufwerke) der Erntemaschine und über einen zweiten Antriebsstrang die Erntegutbearbeitungs- und/oder-fördermittel der Erntemaschine an.

Um sicherzustellen, dass eine zumindest etwa optimale Auslastung der Erntemaschine erzielt wird, wurde vorgeschlagen, eine für den jeweiligen Erntegutdurchsatz repräsentative Messgröße zu erfassen und die Vortriebsgeschwindigkeit der Erntemaschine durch Variation des Übersetzungsverhältnisses des ersten Antriebsstranges im Sinne einer Einhaltung eines gewünschten Erntegutdurchsatzes zu kontrollieren.

Hierzu sei auf die EP 1 243 173 A1 verwiesen, die einen Mähdrescher mit einem hydrostatischen ersten Antriebsstrang beschreibt. Der jeweilige Durchsatz wird anhand des Antriebsmoments eines Axialdresch- und Trennrotors erfasst und die Vortriebsgeschwindigkeit selbsttätig derart angesteuert, dass das Antriebsmoment einem vorgegebenen Wert entspricht. Dieser vorgegebene Wert wird durch einen Bediener eingegeben (kalibriert), indem er eine gewünschte Verlustrate auswählt. Weiterhin kann die Feuchtigkeit des Ernteguts erfasst und bei der Einstellung der Vortriebsgeschwindigkeit berücksichtigt werden, d.h. der Mähdrescher fährt bei feuchtem (und somit schwerer zu verarbeitendem) Erntegut langsamer als bei trockenem Erntegut.

Es wurde bei einer ähnlichen Anordnung vorgeschlagen, dass der Bediener eine gewünschte Erntegutaufnahmerate eingibt und die Steuerung die Antriebsmotordrehzahl im Sinne des Einhalten eines gewünschten Durchsatzes kontrolliert (EP 2 057 880 A2). Die EP 2 832 205 A1 schlägt vor, dass der Bediener nicht nur einen gewünschten Durchsatz, sondern auch einen Arbeitspunkt des Antriebsmotors vorgeben kann. Die Steuerung kontrolliert somit nicht nur die Vortriebsgeschwindigkeit, sondern auch den Antriebsmotor, um beide Vorgaben einzuhalten.

### Aufgabe

Im Stand der Technik wird demnach durch den Bediener ein Wert eingegeben oder ausgewählt, der einem gewünschten Durchsatz an Erntegut je Zeiteinheit entspricht. Einer Steuerung wird ein Messwert hinsichtlich des aktuellen Durchsatzes zugeführt, um ein Steuersignal zur Vorgabe der Vortriebsgeschwindigkeit zu generieren, das direkt (EP 1 243 173 A1, EP 2 382 205 A1) oder über einen inneren Geschwindigkeitsregelkreis (EP 2 057 880 A2) zur Ansteuerung eines die Vortriebsgeschwindigkeit kontrollierenden Aktors des Antriebsstranges zum Vortrieb der Erntemaschine dient.

Als nachteilig ist hierbei anzusehen, dass eine Vorgabe eines Sollwertes für den Erntegutdurchsatz Insbesondere für weniger erfahrene Bediener relativ schwierig ist. Das führt dazu, dass in vielen Fällen zu kleine Sollwerte eingegeben werden, sodass die Leistung der Erntemaschine nur teilweise ausgenutzt wird, oder die Sollwerte sind zu groß, was zu Verstopfungen führen kann.

Die vorliegende Erfindung hat sich zur Aufgabe gemacht, die erwähnten Nachteile zumindest teilweise zu vermeiden.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Eine Anordnung zur Kontrolle der Vortriebsgeschwindigkeit einer Erntemaschine umfasst eine elektronische Steuerung, die mit Mitteln zur Steuerung der Vortriebsgeschwindigkeit der Erntemaschine verbunden ist Die Steuerung beinhaltet eine äußere Regelschleife zur Kontrolle der Mittel zur Steuerung der Vortriebsgeschwindigkeit der Erntemaschine, der als Eingangsgrößen Soll- und Istwerte hinsichtlich der Leistung eines zum Antrieb der Erntemaschine dienenden Verbrennungsmotors zuführbar sind. Die Steuerung ist betreibbar, die Mittel zur Steuerung der Vortriebsgeschwindigkeit der Erntemaschine derart anzusteuern, dass der Istwert der Leistung des Verbrennungsmotors möglichst gut mit dem Sollwert der Leistung des Verbrennungsmotors übereinstimmt.

Die elektronische Steuerung kann eine innere Regelschleife zur Kontrolle der Vortriebsgeschwindigkeit beinhalten, welcher ein Sollwert und ein Istwert einer durchsatzabhängigen Größe zuführbar sind. Die äußere Regelschleife dient zur Bereitstellung des Sollwerts der durchsatzabhängigen Größe für die innere Regelschleife.

Mit anderen Worten wird zunächst ein Sollwert für die bereitzustellende Leistung eines Antriebs der Erntemaschine vorgegeben, sei es durch einen Bediener oder eine übergeordnete Regelung, die beispielsweise auf externen Vorgaben oder ökonomischen Erwägungen basieren könnte. Bei diesem Sollwert kann es sich um eine absolute Leistung handeln, die in kW gemessen werden könnte, oder um eine relative Leistung, die einen (prozentualen) Anteil an einer verfügbaren Antriebleistung definiert. Es kann somit beispielsweise vorgegeben werden, dass die Erntemaschine mit 80 % der verfügbaren Nenn-Antriebsleistung betrieben wird. Der Sollwert wird einer äußeren Regelschleife zugeführt. Zudem wird der aktuelle Ist-Wert der Leistung des Antriebs der Erntemaschine erfasst und der äußeren Regelschleife zugeführt. Die äußere Regelschleife kontrolliert die Geschwindigkeit der Erntemaschine über die Mittel zur Steuerung der Vortriebsgeschwindigkeit der Erntemaschine.

Wenn es sich bei diesen Mitteln um eine innere Regelschleife handelt, liefert die äußere Regelschleife als Ausgangsgröße einen Sollwert für eine erntegutdurchsatzabhängige Größe, die in beliebigen Einheiten gemessen werden kann, sei es als Volumen- oder Massendurchsatz je Zeiteinheit oder eine beliebige andere, den Erntegutdurchsatz repräsentierende Größe, wie ein Antriebsmoment einer Erntegutförder- oder -bearbeitungseinrichtung oder ein zugehöriger hydraulischer Druck im Antriebssystem der Erntegutförder- oder-bearbeitungseinrichtung oder eine Auslenkung eines mit dem Erntegut zusammenwirkenden Elements. Dieser Sollwert für die erntegutdurchsatzabhängige Größe wird der inneren Regelschleife zugeführt, die zudem mit einem gemessenen Ist-Wert für die erntegutdurchsatzabhängige Größe beaufschlagbar ist. Anhand der beiden Eingangsgrößen steuert die innere Regelschleife in an sich bekannter Weise direkt oder indirekt über eine weitere Regelschleife die Vortriebsgeschwindigkeit der Erntemaschine.

Die vorliegende Erfindung erweitert die demnach klassische Durchsatzregelung einer Erntemaschine, indem die Geschwindigkeit der Erntemaschine kontrolliert und insbesondere der Sollwert des Erntegutdurchsatzes über die äußere Regelschleife nachgeführt wird, so dass die Antriebslast auf einen gewünschten Sollwert, der z.B. vom Bediener oder einer höheren Regelung vorgegeben werden kann, eingeregelt wird. Somit dient als eingebbare Eingangsgröße der erfindungsgemäßen Anordnung nicht, wie im Stand der Technik, die erntegutdurchsatzabhängige Größe, sondern der Sollwert für die bereitzustellende Leistung des Antriebs. Diese Eingangsgröße ist wesentlich anschaulicher als erntegutdurchsatzabhängige Größe und somit bedienerfreundlicher und mit geringerer Fehlerwahrscheinlichkeit einzugeben. Zudem entfällt die im Stand der Technik vorgesehene, umständliche und fehlerträchtige Kalibrierung der erntegutdurchsatzabhängigen Größe anhand eines Erntegutverlustes oder dgl. Durch Einstellen des gewünschten Sollwerts für die Antriebsleistung hat der Bediener die Möglichkeit, direkt die gewünschte Auslastung vorzugeben, was wesentlich leichter zu verstehen und zu handhaben ist. In der Regel ist die äußere Regelschleife langsamer als die innere Regelschleife.

Die durchsatzabhängige Größe kann ein Druck sein und insbesondere anhand des Drucks eines Aktors zur Verstellung eines Riemenvariators eines Antriebs einer Erntegutförder- und/oder -bearbeitungseinrichtung erfasst werden.

Der äußeren Regelschleife können als Istwert für die Leistung des Antriebs Signale einer Motorsteuerung eines Verbrennungsmotors des Antriebs zuführbar sein, oder anderweitig gemessene Leistungswerte, die möglichst repräsentativ sind für die (insgesamt oder für die Erntegutbearbeitung) abgenommene Leistung des Verbrennungsmotors. So kann das gesamte vom Verbrennungsmotor abgegebene oder an einen wesentlichen Teil der angetriebenen Elemente der Erntemaschine (z.B. Erntegutförder- und -bearbeitungselemente und ggf. die Vortriebselemente) abgegebene Drehmoment erfasst werden.

Die Motorsteuerung ist insbesondere eingerichtet, den Betrieb des Verbrennungsmotors unabhängig vom Sollwert der Leistung des Antriebs zu steuern. Hierbei kann beispielsweise eine isochrone Regelung vorgesehen sein, d.h. die Drehzahl des Verbrennungsmotors bleibt zumindest bis zu einer Nennleistung gleich und kann anschließend mit steigender Leistung absinken (vgl. EP 2 253 822 A2, deren Offenbarung durch Verweis mit in die vorliegenden Unterlagen aufgenommen wird). Es wäre jedoch auch möglich, dass die Anordnung zur Kontrolle der Vortriebsgeschwindigkeit der Erntemaschine den Sollwert der Leistung des Antriebs der Motorsteuerung zuführt, welche den Betriebspunkt (Drehzahl und Leistung) des Verbrennungsmotors abhängig vom Sollwert der Leistung auf einen optimalen (z.B. verbrauchsgünstigen) Betriebspunkt einstellt.

Im Falle eines elektrischen Antriebs der Erntemaschine unter Verwendung einer Batterie, einer Brennstoffzelle und/oder eines Generators als Energiequelle könnte die Leistung des Antriebs direkt, d.h. auf elektrischem Wege gemessen werden, indem alle von der Energiequelle abgenommenen Leistungen durch eine einzige Messung erfasst oder an unterschiedlichen Messstellen erfasst und addiert werden.

Die innere Regelschleife kann eine weitere Regelschleife steuern, welche mit einem Ist- und einem Sollwert für die Vortriebsgeschwindigkeit beaufschlagbar ist und einen die Vortriebsgeschwindigkeit der Erntemaschine beeinflussenden Aktor kontrolliert, wie in der EP 2 057 880 A2 beschrieben wird.

Der inneren Regelschleife und/oder der weiteren Regelschleife kann zusätzlich eine äußere Stellgröße zuführbar sein, die zur Herabregelung der Vortriebsgeschwindigkeit heranziehbar ist. Die äußere Stellgröße kann insbesondere eine Überschreitung eines Schwellwerts der Leistung des Antriebs darstellen. Durch die (wie erwähnt, langsamere) äußere Schleife besteht bei hohen Lasten die Gefahr der Überlastung des Antriebs und des Verstopfens der Maschine. Dieses Problem kann durch die Berücksichtigung der äußeren Stellgröße vermieden werden, die bei hohen Lasten eine direkte Geschwindigkeitsregelung (Reduzierung) aufschaltet, z.B. in Abhängigkeit von einem gemessenen Drehzahlabfall unter die Nenndrehzahl des Antriebs oder eine einen Schwellwert überschreitende, abgegebene Leistung. Auf der Leistungskurve des Verbrennungsmotors hält die Regelung damit den Betriebspunkt stabil im Bereich zwischen Nenn- und Maximalleistung.

Die Erntemaschine kann als Mähdrescher oder Feldhäcksler ausgeführt sein.

### Ausführunasbeispiel

In den Zeichnungen ist ein nachfolgend näher beschriebenes Ausführungsbeispiel der Erfindung dargestellt. Es zeigt:
- Fig. 1: eine schematische seitliche Ansicht einer landwirtschaftlichen Erntemaschine in Form eines Mähdreschers,
- Fig. 2: ein Schema einer Anordnung zur Kontrolle der Vortriebsgeschwindigkeit der Erntemaschine der Figur 1, und
- Fig. 3: ein detailliertes Diagramm der Steuerung der Anordnung der Figur 2.

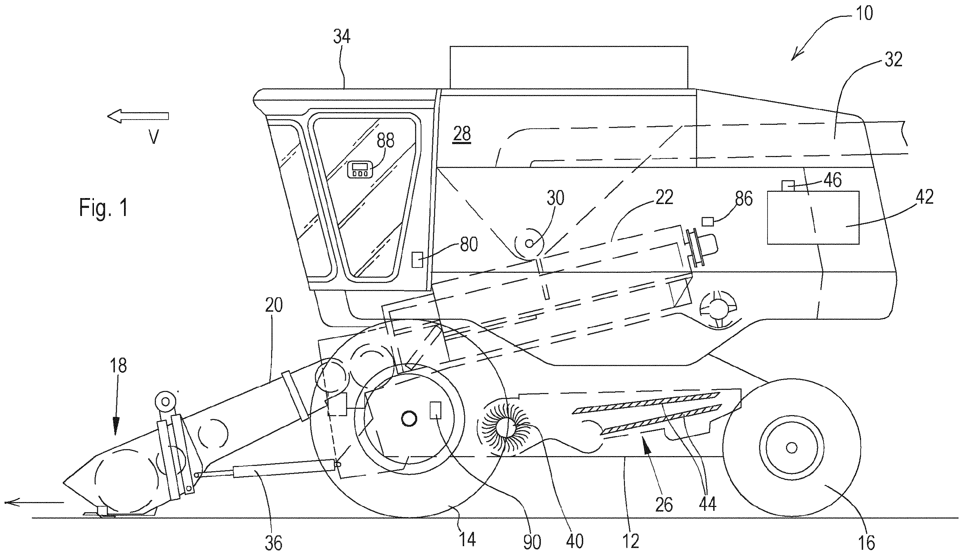

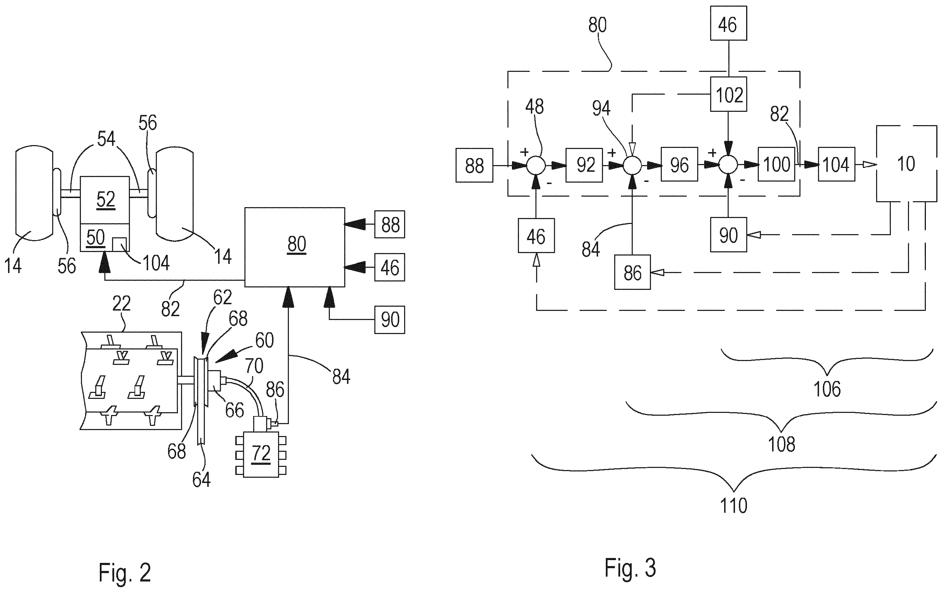

Die Figur 1 zeigt eine selbstfahrende Erntemaschine 10 in Form eines Mähdreschers mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels in der Figur 2 gezeigter Antriebsmittel in Drehung versetzt, um die Erntemaschine 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb, die in der Figur 1 nach links verläuft.

An den vorderen Endbereich der Erntemaschine 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors 42 angetrieben, dem eine Motorsteuerung 46 zugeordnet ist, und von einem Bediener aus einer Fahrerkabine 34 heraus kontrolliert und gesteuert, wozu eine Bedienerschnittstelle 88 vorgesehen ist.

Es wird nun auf die Figur 2 verwiesen. Die vorderen Räder 14 der Erntemaschine 10 werden durch ein hydrostatisches Getriebe 50 angetrieben. Das hydrostatische Getriebe 50 wird auf konventionelle Weise den Verbrennungsmotor 42 angetrieben. Das hydrostatische Getriebe 50 treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit, wobei die Pumpeneinheit auch im Abstand von der Motoreinheit angeordnet sein könnte. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile 104 steuern die Positionen der Taumelplatten. Die lenkbaren hinteren Räder 16 können auch durch Radmotoren angetrieben werden, die direkt an den Rädern 16 befestigt sind. Die Geschwindigkeit der Radmotoren kann ebenfalls durch das unten beschriebene Durchsatzsteuerungssystem gesteuert werden.

Ein verstellbarer Antrieb 60 mit variablem Drehmoment treibt den Rotor des Axialdreschwerks 22 an. Derselbe Verbrennungsmotor 42, der auch das hydrostatische Getriebe 50 antreibt, treibt auch den verstellbaren Antrieb 60 an. Der verstellbare Antrieb 60 ist ein Riementrieb, der eine nicht gezeigte antreibende Riemenscheibe mit variablem Durchmesser und eine angetriebene Riemenscheibe 62 mit variablem Durchmesser umfasst. Ein Riemen 64 erstreckt sich zwischen der antreibenden Riemenscheibe und der angetriebenen Riemenscheibe 62, um Rotationsleistung zu übertragen. Hydraulikzylinder steuern die Durchmesser der Riemenscheiben. Der Hydraulikzylinder 66 ist mit der angetriebenen Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheiben wird die effektive Geschwindigkeit der angetriebenen Riemenscheibe 62 geändert. Durch eine Hydraulikleitung 70 wird dem Hydraulikzylinder 66 unter Druck stehende Hydraulikflüssigkeit von einem Ventilzusammenbau 72 zugeführt. Der Rotor des Axialdreschwerks 22 wird durch die Riemenscheiben variablen Durchmessers mit einer konstanten, ausgewählten Rotorgeschwindigkeit angetrieben. Das vom Riemen 64 und den Riemenscheiben übertragene Drehmoment variiert mit dem Gutdurchsatz.

Eine elektronische Steuerung 80 steuert die Vortriebs- und somit die Erntegeschwindigkeit der Erntemaschine 10. Das bedeutet, dass die elektronische Steuerung 80 die Vorwärtsgeschwindigkeit (Erntegeschwindigkeit) des Mähdreschers 10 durch ein Einstellen der Position der Taumelplatten des hydrostatischen Getriebes 50 einstellt, indem der Betrieb der elektromagnetisch betätigten Steuerventile 104 über eine Leitung 82 gesteuert wird. Die Steuerung 80 empfängt durch die Leitung 84 ein aktuelles Hydraulikdrucksignal von einem Hydraulikdrucksensor 86. Der Hydraulikdrucksensor 86 fühlt den Hydraulikdruck des Hydraulikzylinders 66, der den Antrieb 60 mit variablem Drehmoment verstellt. Es wurde herausgefunden, dass der Hydraulikdruck, mit dem der Hydraulikzylinder 66 den Antrieb 60 verstellt, mit dem Durchsatz in eindeutiger Beziehung steht. Über die Leitung 84 wird die Steuerung 80 demnach mit einem Signal beaufschlagt, das eine Information hinsichtlich des tatsächlichen Erntegutdurchsatzes der Erntemaschine 10 enthält. Zudem erhält die Steuerung 80 von einem Geschwindigkeitssensor 90 Signale hinsichtlich der tatsächlichen Vortriebsgeschwindigkeit V der Erntemaschine 10. Der Geschwindigkeitssensor 90 kann beispielsweise als Radarsensor die Geschwindigkeit der Erntemaschine 10 gegenüber dem Erdboden oder die Drehzahl eines der vorderen Räder 14 erfassen. Auch wird der Steuerung 80 ein Signal hinsichtlich der jeweils vom Verbrennungsmotor 42 abgegebenen Leistung zugeführt, das von der Motorsteuerung 46 bereitgestellt werden kann und auf dessen Kraftstoffverbrauch und/oder einer Drehmomentmessung an der Kurbelwelle des Verbrennungsmotors 42 beruhen kann. Auch die Bedienerschnittstelle 88 ist mit der Steuerung 80 verbunden.

Die Figur 3 zeigt den Aufbau der Steuerung 80 im Einzelnen. Die Steuerung 80 kann analog oder digital arbeiten. Sie umfasst einen ersten Subtrahierer 48, dem als positiver Eingangswert eine Eingabe von der Bedienerschnittstelle 88 zugeführt wird, die einen Sollwert der Leistung des Verbrennungsmotors 42 definiert. Dieser Sollwert kann in absoluten Zahlen (Leistung in kW) oder als Prozentsatz einer maximalen Leistung oder Nennleistung eingegeben werden. Dem ersten Subtrahierer 46 wird als negativer Eingangswert die tatsächliche vom Verbrennungsmotor 42 abgegebene Leistung zugeführt. Die Differenz aus Soll- und Istwert der Leistung des Verbrennungsmotors 42 wird vom ersten Subtrahierer 48 einem äußeren Regler 92 zugeführt, der in an sich bekannter Weise als PID-Regler ausgeführt sein kann. Der äußere Regler 92 gibt als Ausgangswert einen Sollwert für den Erntegutdurchsatz aus, der in der dargestellten Ausführungsform durch den Druck des Hydraulikzylinders 66 repräsentiert wird, welcher mit dem Hydraulikdrucksensor 86 gemessen wird.

Der Sollwert für den Erntegutdurchsatz wird vom Ausgang des äußeren Reglers 92 als positiver Eingangswert einem zweiten Subtrahierer 94 zugeführt, welchem als negativer Eingangswert das Signal des Hydraulikdrucksensors 86 über die Leitung 84 zugeführt wird. Am Ausgang des zweiten Subtrahierers 94 steht demnach die Differenz aus Soll- und Istwert einer den Erntegutdurchsatz repräsentierenden Größe bereit, die dem Eingang eines inneren Reglers 96 zugeführt wird, der ebenfalls in an sich bekannter Weise als PID-Regler ausgeführt sein kann und vorzugsweise eine kleinere Zeitkonstante als der äußere Regler 92 aufweist, d.h. schneller auf Änderungen der Eingangsgröße reagieren kann. Der innere Regler 96 gibt als Ausgangswert einen Sollwert für die Vortriebsgeschwindigkeit aus.

Dieser Sollwert für die Vortriebsgeschwindigkeit der Erntemaschine 10 wird als positiver Eingangswert einem dritten Subtrahierer 98 zugeführt, dem als negativer Eingangswert die mit dem Geschwindigkeitssensor 90 erfasste, tatsächliche Vortriebsgeschwindigkeit der Erntemaschine 10 zugeführt wird. Die Differenz zwischen Soll- und Istgeschwindigkeit der Erntemaschine 10 wird dem Eingang eines weiteren Reglers 100 zugeführt, der ebenfalls in an sich bekannter Weise als PID-Regler ausgeführt sein kann und vorzugsweise eine kleinere Zeitkonstante als der innere Regler 96 aufweist und dessen Ausgangssignale über die Leitung 82 an die Steuerventile 104 gelangen.

Demnach ergeben sich in der Steuerung der Figur 3 insgesamt drei Regelschleifen. Als innerste (weitere) Regelschleife 106 kann die Geschwindigkeitsregelschleife angesehen werden, die den dritten Subtrahierer 98, den weiteren Regler 100, die Steuerventilen 104 und den Geschwindigkeitssensor 90 umfasst. Diese Geschwindigkeitsregelschleife sorgt dafür, dass die Vortriebsgeschwindigkeit der Erntemaschine 10 möglichst gut mit dem Sollwert der Vortriebsgeschwindigkeit übereinstimmt, die am Ausgang des inneren Reglers 96 zur Verfügung steht. Der innerste (weitere) Regelkreis könnte, wie in EP 1 243 173 A1, auch entfallen und der innere Regler 96 die Steuerventile 104 direkt ansteuern.

Als innere Regelschleife 108, die hier als Mittel zur Steuerung der Vortriebsgeschwindigkeit v der Erntemaschine dient, kann die Erntegutdurchsatzregelschleife angesehen werden, die den zweiten Subtrahierer 94, den inneren Regler 96, die im vorhergehenden Absatz beschriebene Geschwindigkeitsregelschleife und den Hydraulikdrucksensor 86 umfasst. Diese Erntegutdurchsatzregelschleife sorgt dafür, dass der Istwert der erntegutdurchsatzabhängigen Größe (d.h. der Druck am Hydraulikdrucksensor 86, der den jeweiligen Erntegutdurchsatz repräsentiert) möglichst gut mit dem Sollwert der erntegutdurchsatzabhängigen Größe übereinstimmt, welcher am Ausgang des äußeren Reglers 92 zur Verfügung steht.

Schließlich kann als eine äußere Regelschleife 110 die Antriebsleistungsregelschleife angesehen werden, welche den ersten Subtrahierer 48, den äußeren Regler 92, die im vorhergehenden Absatz beschriebene Erntegutdurchsatzregelschleife und die Bestandteile der Motorsteuerung 46 umfasst, welche die Signale hinsichtlich der Leistung des Verbrennungsmotors 42 bereitstellen. Diese Antriebsleistungsregelschleife sorgt dafür, dass der Istwert der Leistung des Verbrennungsmotors 42 möglichst gut mit dem Sollwert der Leistung des Verbrennungsmotors 42 übereinstimmt, wie der durch die Bedienereingabeeinrichtung 88 (oder einer übergeordneten Regelung) vorgegeben wird.

Durch die Antriebsleistungsregelschleife, die der an sich bekannten Erntegutdurchsatzregelschleife hinzugefügt wurde, ist es dem Bediener wesentlich erleichtert, eine sinnvolle Vorgabe für den Betrieb der Erntemaschine 10 einzugeben, denn die Leistung ist wesentlich anschaulicher als ein Durchsatz oder ein davon abhängiger Wert.

Wie bereits beschrieben, ist die äußere Regelschleife (Antriebsleistungsregelschleife) langsamer als die innere Regelschleife (Erntegutdurchsatzregelschleife). Um zu verhindern, dass bei größeren Durchsätzen eine Verstopfung der Erntemaschine 10 auftritt, wird der inneren Regelschleife und/oder der innersten (weiteren) Regelschleife durch einen Vortriebsgeschwindigkeitsverminderer 102 noch eine äußere Stellgröße zugeführt, die bei Aktivierung im Sinne einer Verminderung der Vortriebsgeschwindigkeit und des Durchsatzes einwirkt. Diese äußere Stellgröße wird dann aktiv, wenn die Leistung des Verbrennungsmotors 42, die dem Vortriebsgeschwindigkeitsverminderer 102 ebenfalls durch die Motorsteuerung 46 zugeführt wird, einen Schwellenwert überschreitet, der beispielsweise dessen Nennleistung entsprechen kann. Dadurch vermeidet man bei ungünstigen Betriebssituationen, auf welche die äußere Regelschleife und sogar ggf. die innere Regelschleife nicht rechtzeitig reagieren können, ein Zufahren oder Verstopfen der Erntemaschine 10. Im Einzelnen kann dabei derart vorgegangen werden, dass die vom Vortriebsgeschwindigkeitsverminderer 102 bewerkstelligte Geschwindigkeitsverminderung (nach Überschreiten der Nennleistung) proportional zum Absinken der Drehzahl von der Nenndrehzahl sein kann. Hierzu sei auf die Kurve 48 der Figur 2 der EP 2 253 822 A1 verwiesen.

Aus den Figuren ergibt sich, dass die Steuerung 80 die abgegebene Leistung des Verbrennungsmotors 42 nur durch die Kontrolle der Vortriebsgeschwindigkeit v der Erntemaschine 10 kontrolliert, nicht aber durch eine Vorgabe an die Motorsteuerung 46, eine bestimmte Leistung bereitzustellen. Die vom Verbrennungsmotor 42 abgegebene Leistung ergibt sich vielmehr indirekt durch die Auslastung der Erntemaschine 10 mit Erntegut. Bei einer anderen Ausführungsform wäre es jedoch denkbar, dass die Steuerung 80 die Motorsteuerung 46 mit einem Signal hinsichtlich der jeweils gewünschten Motorleistung beaufschlagt, damit die Motorsteuerung 46 einen optimalen Betriebspunkt des Verbrennungsmotors 42 einstellen kann.

Schließlich ist anzumerken, dass man die innere Regelschleife 108 entfallen lassen könnte. Der äußere Regler 92 würde dann direkt die Vortriebsgeschwindigkeit v kontrollieren, sei es (unter Wegfall der innersten (weiteren) Regelschleife 106) durch direkte Ansteuerung der Steuerventile 104 oder durch Vorgabe eines Sollwerts der Vortriebsgeschwindigkeit v an die innerste (weitere) Regelschleife 106. Eine derartige Anordnung kann bei Erntemaschinen 10 in Form von Feldhäckslern sinnvoll sein, bei denen sich der Erntegutdurchsatz nur schwierig ermitteln lässt. Die Stellgröße vom Vortriebsgeschwindigkeitsverminderer 102 würde dann direkt von der Vorgabe der Vortriebsgeschwindigkeit abgezogen.

## Patentansprüche

1. Anordnung zur Kontrolle der Vortriebsgeschwindigkeit einer Erntemaschine (10), umfassend eine elektronische Steuerung (80), die mit Mitteln zur Steuerung der Vortriebsgeschwindigkeit (104) der Erntemaschine (10) verbindbar ist, **dadurch gekennzeichnet, dass** die Steuerung (80) eine äußere Regelschleife (110) zur Kontrolle der Mittel zur Steuerung der Vortriebsgeschwindigkeit (104) der Erntemaschine (10) beinhaltet, dass der äußeren Regelschleife (110) als Eingangsgrößen Soll- und Istwerte hinsichtlich der Leistung eines zum Antrieb der Erntemaschine (10) dienenden Verbrennungsmotors (42) zuführbar sind und dass die Steuerung (80) betreibbar ist, die Mittel zur Steuerung der Vortriebsgeschwindigkeit (104) der Erntemaschine (10) derart anzusteuern, dass der Istwert der Leistung des Verbrennungsmotors (42) möglichst gut mit dem Sollwert der Leistung des Verbrennungsmotors (42) übereinstimmt.

2. Anordnung nach Anspruch 1, wobei die elektronische Steuerung (80) eine innere Regelschleife (108) beinhaltet, welcher ein Sollwert und ein Istwert einer durchsatzabhängigen Größe zuführbar sind und die äußere Regelschleife (110) zur Bereitstellung des Sollwerts der durchsatzabhängigen Größe für die innere Regelschleife (108) eingerichtet ist.

3. Anordnung nach Anspruch 2, wobei die durchsatzabhängige Größe ein Druck ist und insbesondere anhand des Drucks eines Aktors (66) zur Verstellung eines Riemenvariators (62) eines Antriebs einer Erntegutförder- und/oder - bearbeitungseinrichtung (22) erfassbar ist.

4. Anordnung nach einem der Ansprüche 1 bis 3, wobei der äußeren Regelschleife (110) als Istwert für die Leistung des Antriebs Signale einer Motorsteuerung (46) eines Verbrennungsmotors (42) des Antriebs zuführbar sind.

5. Anordnung nach Anspruch 4, wobei die Motorsteuerung (46) eingerichtet ist, den Betrieb des Verbrennungsmotors (42) unabhängig vom Sollwert der Leistung des Antriebs zu steuern.

6. Anordnung nach einem der Ansprüche 1 bis 5, wobei der Sollwert hinsichtlich der Leistung des Verbrennungsmotors (42) der Erntemaschine (10) durch einen Bediener eingebbar ist.

7. Anordnung nach einem der Ansprüche 2 bis 6, wobei die innere Regelschleife (108) eine weitere Regelschleife (106) steuert, welche mit einem Ist- und einem Sollwert für die Vortriebsgeschwindigkeit (v) beaufschlagbar ist und einen die Vortriebsgeschwindigkeit (v) der Erntemaschine (10) beeinflussenden Aktor (104) kontrolliert.

8. Anordnung nach einem der Ansprüche 2 bis 7, wobei der inneren Regelschleife (108) und/oder der weiteren Regelschleife (106) zusätzlich eine äußere Stellgröße zuführbar ist, die zur Herabregelung der Vortriebsgeschwindigkeit (v) heranziehbar ist.

9. Anordnung nach Anspruch 8, wobei die äußere Stellgröße eine Überschreitung eines Schwellwerts der Leistung des Antriebs darstellt.

10. Erntemaschine (10) mit einer Anordnung nach einem der vorhergehenden Ansprüche.

## Claims

1. Arrangement for controlling the propulsion speed of a harvester (10), comprising an electronic controller (80) which is connectable to means for controlling the propulsion speed (104) of the harvester (10), **characterized in that** the controller (80) includes an outer control loop (110) for controlling the means for controlling the propulsion speed (104) of the harvester (10), **in that** desired and actual values in respect of the power of an internal combustion engine (42) serving for driving the harvester (10) can be supplied as input variables to the outer control loop (110), and **in that** the controller (80) can be operated in order to activate the means for controlling the propulsion speed (104) of the harvester (10) in such a manner that the actual value of the power of the internal combustion engine (42) coincides as readily as possible with the desired value of the power of the internal combustion engine (42).

2. Arrangement according to Claim 1, wherein the electronic controller (80) includes an inner control loop (108) to which a desired value and an actual value of a throughput-dependent variable can be supplied, and the outer control loop (110) is designed for providing the desired value of the throughput-dependent variable for the inner control loop (108).

3. Arrangement according to Claim 2, wherein the throughput-dependent variable is a pressure and can be detected in particular with reference to the pressure of an actuator (66) for adjusting a belt variator (62) of a drive of a crop-conveying and/or -processing device (22).

4. Arrangement according to one of Claims 1 to 3, wherein signals of a motor controller (46) of an internal combustion engine (42) of the drive can be supplied to the outer control loop (110) as the actual value for the power of the drive.

5. Arrangement according to Claim 4, wherein the motor controller (46) is designed to control the operation of the internal combustion engine (42) independently of the desired value of the power of the drive.

6. Arrangement according to one of Claims 1 to 5, wherein the desired value in respect of the power of the internal combustion engine (42) of the harvester (10) can be input by an operator.

7. Arrangement according to one of Claims 2 to 6, wherein the inner control loop (108) controls a further control loop (106) which can be provided with an actual value and a desired value for the propulsion speed (v) and controls an actuator (104) influencing the propulsion speed (v) of the harvester (10).

8. Arrangement according to one of Claims 2 to 7, wherein an external actuating variable which can be used for reducing the propulsion speed (v) can additionally be supplied to the inner control loop (108) and/or to the further control loop (106).

9. Arrangement according to Claim 8, wherein the external actuating variable represents an exceeding of a threshold value of the power of the drive.

10. Harvester (10) with an arrangement according to one of the preceding claims.

## Revendications

1. Agencement de contrôle de la vitesse d'avance d'une moissonneuse (10), comprenant une commande électronique (80) qui peut être connectée à des moyens pour commander la vitesse d'avance (104) de la moissonneuse (10), **caractérisé en ce que** la commande (80) contient une boucle de régulation extérieure (110) pour contrôler les moyens de commande de la vitesse d'avance (104) de la moissonneuse (10), **en ce que** des valeurs de consigne et des valeurs instantanées relatives à la puissance d'un moteur à combustion interne (42) servant à l'entraînement de la moissonneuse (10) peuvent être acheminées à la boucle de régulation extérieure (110) en tant que grandeurs d'entrée et **en ce que** la commande (80) peut être actionnée de manière à piloter les moyens de commande de la vitesse d'avance (104) de la moissonneuse (10) de telle sorte que la valeur instantanée de la puissance du moteur à combustion interne (42) coïncide le mieux possible avec la valeur de consigne de la puissance du moteur à combustion interne (42).

2. Agencement selon la revendication 1, dans lequel la commande électronique (80) contient une boucle de régulation intérieure (108) à laquelle peuvent être acheminées une valeur de consigne et une valeur instantanée d'une grandeur dépendant du rendement et la boucle de régulation extérieure (110) est prévue pour fournir la valeur de consigne de la grandeur dépendant du rendement pour la boucle de régulation intérieure (108).

3. Agencement selon la revendication 2, dans lequel la grandeur dépendant du rendement est une pression et peut être détectée notamment à l'aide de la pression d'un actionneur (66) pour le réglage d'un variateur de courroie (62) d'un entraînement d'un dispositif de transport et/ou de traitement de récoltes (22).

4. Agencement selon l'une quelconque des revendications 1 à 3, dans lequel des signaux d'une commande de moteur (46) d'un moteur à combustion interne (42) de l'entraînement peuvent être acheminés à la boucle de régulation extérieure (110) en tant que valeur instantanée de la puissance de l'entraînement.

5. Agencement selon la revendication 4, dans lequel la commande de moteur (46) est prévue pour commander le fonctionnement du moteur à combustion interne (42) indépendamment de la valeur de consigne de la puissance de l'entraînement.

6. Agencement selon l'une quelconque des revendications 1 à 5, dans lequel la valeur de consigne relative à la puissance du moteur à combustion interne (42) de la moissonneuse (10) peut être entrée par un opérateur.

7. Agencement selon l'une quelconque des revendications 2 à 6, dans lequel la boucle de régulation intérieure (108) commande une boucle de régulation supplémentaire (106) qui peut être sollicitée avec une valeur instantanée et une valeur de consigne pour la vitesse d'avance (v) et qui contrôle un actionneur (104) influençant la vitesse d'avance (v) de la moissonneuse (10).

8. Agencement selon l'une quelconque des revendications 2 à 7, dans lequel une grandeur de réglage extérieure peut en outre être acheminée à la boucle de régulation intérieure (108) et/ou à la boucle de régulation supplémentaire (106), laquelle grandeur de réglage peut être utilisée pour ajuster à la baisse la vitesse d'avance (v).

9. Agencement selon la revendication 8, dans lequel la grandeur de réglage extérieure constitue un dépassement d'une valeur seuil de la puissance de l'entraînement.

10. Moissonneuse (10) comprenant un agencement selon l'une quelconque des revendications précédentes.
